(19) Europäisches Patentamt
European Patent Office
Office européen des brevets

(11) Veröffentlichungsnummer: **0 207 881**
**B1**

(12) # EUROPÄISCHE PATENTSCHRIFT

(45) Veröffentlichungstag der Patentschrift: **20.09.89**

(51) Int. Cl.⁴: **H02H 3/093**

(21) Anmeldenummer. **86730093.1**

(22) Anmeldetag: **06.06.86**

(54) **Verfahren zum Erzeugen eines Auslösesignals in Abhängigkeit von der Grösse und der Dauer eines Überstromes.**

(30) Priorität: **21.06.85 DE 3522739**

(43) Veröffentlichungstag der Anmeldung: **07.01.87 Patentblatt 87/2**

(45) Bekanntmachung des Hinweises auf die Patenterteilung: **20.09.89 Patentblatt 89/38**

(84) Benannte Vertragsstaaten: **DE FR GB IT**

(56) Entgegenhaltungen:
**GB-A- 2 037 104**
**GB-A- 2 047 995**

(73) Patentinhaber: **Siemens Aktiengesellschaft, Wittelsbacherplatz 2, D-8000 München 2(DE)**

(72) Erfinder: **Förnsel, Helmut, Ing. grad., Zietenstrasse 12, D-7500 Karlsruhe 21(DE)**
Erfinder: **Simmel, Hans-Eberhard, Dipl.-Ing., Piemontstrasse 6, D-7500 Karlsruhe 31(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Die Erfindung bezieht sich auf ein Verfahren zum Erzeugen eines Auslösesignals in Abhängigkeit von der Größe und der Dauer eines Überstromes, bei dem eine aus dem Überstrom abgeleitete, gleichgerichtete Meßgröße abgetastet wird und die abgetasteten Meßwerte in entsprechende digitale Werte umgeformt werden, die digitalen Werte einer vorgegebenen Funktion entsprechend gewichtet und aufsummiert werden und bei einem oberhalb eines vorgegebenen Vergleichswertes liegenden Summenwert das Auslösesignal gebildet wird und die Aufsummierung vor Bildung des Auslösesignals rückgängig gemacht wird, wenn der Überstrom für eine Zeit eine vorgegebene Schwelle unterschreitet.

Nach einem derartigen Verfahren arbeitet ein bekanntes Überwachungsgerät, das in der DE-OS 29 50 031 beschrieben ist. Bei diesem bekannten Überwachungsgerät wird nämlich eine durch Gleichrichtung aus dem zu überwachenden Strom gewonnene Meßgröße mittels einer Abtastschaltung abgetastet und die so gewonnenen Abtastwerte in einem A/D-Wandler in entsprechende digitale Werte umgeformt. Die digitalen Werte werden in einem Funktionsgenerator gewichtet und nach Wichtung in einer Summationsschaltung aufaddiert. Erreicht der Stand der Summationsschaltung einen vorgegebenen Vergleichswert, dann wird ein Auslösesignal erzeugt. Bei dem bekannten Überwachungsgerät ist an den A/D-Wandler eine Schaltungsbaugruppe angeschlossen, mit der ständig überprüft wird, ob der zu überwachende Strom Überstromwerte aufweist. Solange dies der Fall ist, wird ein der Schaltungsbaugruppe nachgeordneter, taktgesteuerter Zähler ständig zurückgestellt. Bleibt das Rückstellsignal der Schaltungsbaugruppe aus, dann läuft der taktgesteuerte Zähler auf einen vorgegebenen Zählerstand auf und stellt dann die Summationsschaltung zurück. Damit dies nicht bereits jeweils dann geschieht, wenn aufgrund des Kurvenverlaufs der gleichgerichteten Meßgröße deren Momentanwerte unter einem einen Überstromwert kennzeichnenden Wert fallen, muß der vorgegebene Zählerstand bei dem bekannten Überwachungsgerät so bemessen sein, daß dieser Zählerstand erst nach einer Zeit erreichbar ist, die etwa der Dauer einer Halbschwingung des zu überwachenden Stromes entspricht oder länger als diese ist. Dies kann dazu führen, daß im Einzelfalle noch eine Auslösung erfolgt, ohne daß dies erforderlich ist. In jedem Falle erfordert das nach dem geschildertern Verfahren arbeitende bekannte Überwachungsgerät für zu überwachende Ströme von 50 Hz oder 60 Hz unterschiedlich hinsichtlich des kritischen Zählerstandes eingestellte Zähler.

Der Erfindung liegt die Aufgabe zugrunde, ein Verfahren zum Erzeugen eines Auslösesignals in Abhängigkeit von der Größe und der Dauer eines Überstromes anzugeben, bei dem der Zeitpunkt des Abbruchs der Aufsummierung bei schwindendem Überstrom unmittelbar von dem Kurvenverlauf der Meßgröße abhängt und somit unabhängig von der Frequenz des jeweils auf Überstromwerte zu überwachenden Stromes etwa nach einer Halbschwingung des zu überwachenden Stromes erfolgt und das sich mit verhältnismäßig geringem Schaltungsaufwand durchführen läßt.

Zur Lösung dieser Aufgabe werden bei einem Verfahren der eingangs angegebenen Art erfindungsgemäß die digitalen Werte des jeweils letzten, mindestens einer Halbperiode des Überstromes entsprechenden Zeitraums gespeichert, und es wird ein Vergleich aller jeweils gleichzeitig gespeicherten digitalen Werte untereinander vorgenommen; der bei jedem Vergleich er mittelte höchste gespeicherte digitale Wert wird als Digitalwert gewichtet und aufsummiert, und bei einem solcherart bei einem Vergleich ermittelten Digitalwert einer unterhalb einer vorgegebenen Schwelle liegenden Größe wird die Aufsummierung rückgängig gemacht.

Ein wesentlicher Vorteil des erfindungsgemäßen Verfahrens besteht darin, daß ein nach diesem Verfahren arbeitendes Gerät unabhängig von der Frequenz eines auf Überstromwerte zu überwachenden Stromes ausgeführt werden kann, weil ein Abbruch der Aufsummierung bzw. ein Löschen der Aufsummierung bei sinkendem Überstrom nicht mittels eines bis zu einem vorgegebenen Zählerstand laufenden Zählers bewirkt ist, sondern dann erfolgt, wenn nach gespeicherten Überstromwerten erstmals aufgrund des Vergleichs als höchster gespeicherter Wert ein Wert ermittelt wird, der unterhalb einer vorgegebenen Schwelle liegt und keinen Überstromwert darstellt. In der Regel wird dies der Fall sein bei dem Scheitelwert der ersten Halbwelle, der unterhalb der vorgegebenen Schwelle liegt. Ein Löschen der Aufsummierung erfolgt also stets in Abhängigkeit von dem tatsächlichen Verlauf der Meßgröße. Ein weiterer Vorteil besteht darin, daß das Verfahren mit vergleichsweise geringem Schaltungsaufwand durchführbar ist, da nur jeweils Scheitelwerten der gleichgerichteten Meßgröße entsprechende Digitalwerte gewichtet und aufsummiert werden, und dies nur solange, wie die Digitalwerte eine vorgegebene Schwelle nicht unterschreiten.

Bei dem erfindungsgemäßen Verfahren hat es sich als vorteilhaft erwiesen, wenn ein Vergleich aller jeweils gleichzeitig gespeicherten digitalen Werte untereinander mit einer Rate erfolgt, die kleiner als die Abtastrate ist, mit der die gleichgerichtete Meßgröße abgetastet wird. Eine derartige Ausgestaltung des erfindungsgemäßen Verfahrens ist vor allem hinsichtlich seiner praktischen Durchführung vorteilhaft, weil eine Anordnung zur Durchführung dieser Ausgestaltung des erfindungsgemäßen Verfahrens relativ geringen Aufwand erfordert. Dies ist dadurch begründet, daß zur Durchführung des Vergleichs nur ein relativ bescheidener Aufwand getrieben werden muß. Wird das erfindungsgemäße Verfahren mit einem Mikrocomputer durchgeführt, woran vor allem gedacht ist, dann läßt es sich mit einem Mikrocomputer verhältnismäßig geringer Leistungsfähigkeit durchführen. Zwar wird bei dieser Art des erfindungsgemäßen Verfahrens durch die im Vergleich zu der Abtastrate niedrigere Vergleichrate die Aufsummierung unter Umständen etwas verspätet rückgängig gemacht, was gegebenenfalls noch zur

Erzeugung eines Auslösesignals führen kann, jedoch tritt die Verringerung des Aufwandes, die sich übrigens auch auf die Ausgestaltung der Anordnung zur Aufsummierung erstreckt, gegenüber dem erwähnten Nachteil in den Vordergrund.

Selbtverständlich kann bei dem erfindungsgemäßen Verfahren auch mit jedem neu eingespeicherten Wert ein Vergleich aller jeweils gleichzeitig gespeicherten digitalen Werte untereinander vorgenommen werden, jedoch geht dies zu Lasten des Aufwandes bei der Durchführung des erfindungsgemäßen Verfahrens, allerdings unter Erzielung einer relativ hohen Meßgenauigkeit.

Wird bei dem erfindungsgemäßen Verfahren ein oberhalb der Vergleichsrate $f_2$ liegende Abtastrate $f_1$ gewählt, dann ist bei einer zweiweg- gleichgerichteten Meßgröße eines Überstromes mit der Frequenz $f_s$ und N gleichzeitig speicherbaren digitalen Werten die Vergleichsrate nach der Beziehung

$$f_2 \geq f_1/N$$

zu wählen, wobei

$$N \geq \frac{1}{2} \cdot \frac{f_1}{f_s}$$

ist.

Zur Erläuterung der Erfindung sind in

Figur 1 mehrere Zeitabläufe und in

Figur 2 eine Schaltungsanordnung in Blockschaltdarstellung wiedergegeben, wobei das Blockschaltbild keinen engen Bezug auf eine tatsächlich in Frage kommende Anordnung zur Durchführung des erfindungsgemäßen Verfahrens darstellt, weil dieses bevorzugt unter Einsatz eines Mikrocomputers durchgeführt wird.

Zur Durchführung des erfindungsgemäßen Verfahrens wird aus einem zu überwachenden Strom J eine gleichgerichtete Meßgröße M gewonnen, was mittels der Gleichrichteranordnung 1 (vgl. Figur 2) geschieht. Diese gleichgerichtete Meßgröße M wird mit einer Frequenz $f_1$ abgetastet, was zur Veranschaulichung in der Figur 2 mittels einer Abtasteinrichtung 2 geschieht. Die abgetasteten Meßwerte werden in digitale Werte umgeformt, was in Figur 2 durch einen Analog-Digital-Umsetzer 3 dargestellt ist. Die digitalen Werte werden in der Reihenfolge ihres Auftretens gespeichert, was in der Blockschaltdarstellung nach Figur 2 in einem Pufferspeicher 4 mit N=6 Speicherplätzen geschieht. Jeder der Speicherplätze des Pufferspeichers 4 ist mit einer Vergleichsanordnung 5 verbunden, in der die jeweils gleichzeitig gespeicherten digitalen Werte untereinander verglichen werden. Im vorliegenden Falle sind im Pufferspeicher 4 stets die jeweils sechs zuletzt abgetasteten und in digitale Form umgesetzten Meßwerte gespeichert, so daß demzufolge in der Vergleichsanordnung 5 aus diesen sechs letzten gespeicherten Werten der höchste gespeicherte digitale Wert ermittelt wird.

Dieser höchste gespeicherte Wert wird entsprechend einer Funktion gewichtet, wobei vor allem an eine Funktion $f=J^2 \times t$ gedacht ist, in der t die Zeit bezeichnet.Zur Veranschaulichung dieses Vorgangs ist in Figur 2 ein Funktionsgenerator 6 dargestellt, dem ein Addierer 7 nachgeordnet ist. In diesem Addierer 7 werden die von dem Funktionsgenerator 6 abgegebenen, gewichteten Werte addiert.

Ergibt die Aufsummierung im Addierer 7 einen vorgegebenen Wert, dann wird ein Auslösesignal Z erzeugt.

In dem dargestellen Blockschaltbild ist dazu eine Grenzwertstufe 8 dargestellt, die auf den vorgegebenen Grenzwert eingestelt ist.

Wie Figur 2 ferner erkenen läßt, werden die von der Vergleichsanordnung 5 abgegebenen Werte, die dem jeweils höchsten gespeicherten Wert im Pufferspeicher 4 entsprechen, auch einem Grenzwertbaustein 9 zugeführt, um daraufhin untersucht zu werden, ob der von der Vergleichsanordnung 5 jeweils abgegebene Digitalwert ober- bzw. unterhalb einer vorgegebenen Schwelle S liegt, wie sie in Figur 1 eingezeichnet ist. Liegt ein Digitalwert der Vergleichsanordnung 5 unterhalb der vorgegebenen Schwelle S, dann wird von dem Grenzwertbaustein 9 ein Reset-Signal an den Addierer 7 abgegeben, wodurch die Aufsummierung rückgängig gemacht wird; ein Auslösesignal Z wird dann nicht erzeugt.

In Figur 1 ist auß der vorgegebenen Schwelle S ein beispielsweiser Verlaufeiner Meßgröße M über der Zeit t dargestelt, wobei diese Meßgröße M im angenommenen Fall durch Zweiweggleichrichtung aus eineme einphasigen, zu überwachenden Strom J gewonnen sein soll. Dabei ist ein Verlauf der Meßgröße M angenommen, der von zunächst oberhalb der vorgegebenen Schwelle S liegenden Werten auf Werte abfällt, die unterhalb der Schwelle S liegen. Ferner ist in Figur 1 in Form des Diagramms A dargestellt, mit welcher Abtastrate die Meßgröße M abgetastet wird; die Abtastrate A ist durch die Frequenz $f_1$ eines Taktgenerators 10 gegeben, der mit dieser Frequenz $f_1$ auch den Pufferspeicher 4 ansteuert.

Ferner ist in Figur 1 der Zeitablauf von Impulsen R wiedergegeben, mit denen der Vergleich aller jeweils gleichzeitig gespeicherten digitalen Werte mittels der Vergleichsanordnung 5, erfolgt; diese Rate ist durch die Frequenz $f_2$ des Taktgenerator 10 bestimmt.

Zum Ablauf des erfindungsgemäßen Verfahrens ist unter Bezungnahme auf die Figuren 1 und 2 zunächst darauf hinzuewisen, daß beim Auftreten des Überstromes eine nicht dargestellte Anrergeschaltung anspricht, worauf die Abtastung der gleichgerichteten Meßgröße einsetzt. Diesgeschieht zum Zeitpunkt t1. Es werden dann mittels der nachfolgenden Abtastimpulse die einzelnen Speicherplätze des Pufferspeichers 4 belegt. Der jeweils höchste gespeicherte Wert, zunächst der Scheitelwert P1 wird von der Vergleichsanordnung 5 auf den 1. Impuls R hin erfaßt und sowohl an den Funktionsgenerator 6 als auch an den Grenzwertbaustein 9 gegeben. Da dieser Wert P1 oberhalb des Schwellwertes S liegt, erfolgt kein Zurücksetzen des Addierers 7.

Mit dem Abtastimpuls A9 wird der Scheitelwert P2 der nachfolgenden Halbwelle erfaßt und als derzeit letzter aktueller Wert in dem Pufferspeicher 4 eingegeben. Mit dem Abtastimpuls A9 erfolgt aufgrund der Vergleichsrate (2. Impuls R) ein weiterer Vergleich der jeweils im Pufferspeicher 4 gleichzeitig gespeicherten Impulse mittels der Vergleichsanordnung 5, so daß nunmehr ein Digitalwert zu den Grenzwertbaustein 9 gelangt, der dem Scheitelwert P2 entspricht und somit auch oberhalb der vorgegebenen Schwelle S liegt. Dieser Vorgang weiderholt sich bei jeder nachfolgenden Halbwelle, bis zum Zeitpunkt t2 auf den entsprechenden Abtastimpuls ein Wert W abgetastet wird, der nahezu dem Scheitelwert P6 entspricht. Dieser Wert W stellt dann den höchsten zur Zeit im Pufferspeicher 4 befindlichen gespeicherten Wert dar, da der dem vorangehenden Scheitelwert entsprechende Digitalwert aus dem Speicher 4 herausgelaufen ist. Die Vergleichsanordnung 5 stellt daher zum Zeitpunkt t2 fest, daß der höchste gespeicherte Wert unterhalb der vorgegebenen Schwelle S liegt, woraufhin von dem Grenzwertbaustein 9 ein Reset-Signal an den Addierer 7 abgegeben wird, woraufhin die Aufsummierung rückgängig gemacht wird; ein Auslösesignal Z tritt nicht auf.

Mit dem erfindungsgemäßen Verfahren ist somit erreichbar, daß in Abhängigkeit von dem zeitlichen Verlauf einer aus dem zu überwachenden Strom abgeleiteten Meßgröße ein Auslösesignal erzeugt wird, wenn dies entsprechend den Eigenschaften eines zu überwachenden Gerätes erforderlich ist, jedoch eine unnötige Ausgabe eines Auslösesignals Z verhindert ist, wenn der Strom vorher unterhalb einer vorgegebenen Schwelle sinkt.

## Patentansprüche

1. Verfahren zum Erzeugen eines Auslösesignals (Z) in Abhängigkeit von der Größe und der Dauer eines Überstromes (J), bei dem

a) eine aus dem Überstrom (3) abgeleitete, gleichgerichtete Meßgröße (M) abgetastet wird und die abgetasteten Meßwerte in entsprechende digitale Werte umgeformt werden,

b) die digitalen Werte einer vorgegebenen Funktion entsprechend gewichtet und aufsummiert werden und bei einem oberhalb eines vorgegebenen Vergleichswertes liegenden Summenwert das Auslösesignal (Z) gebildet wird,

c) die Aufsummierung vor Bildung des Auslösesignals (Z) rückgängig gemacht wird, wenn der Überstrom (J) für eine Zeit eine vorgegebene Schwelle (S) unterschreitet,

**dadurch gekennzeichnet,** daß

d) die digitalen Werte des jeweils letzten, mindestens einer Halbperiode des Überstromes (J) entsprechenden Zeitraums gespeichert werden, daß

e) ein Vergleich aller jeweils gleichzeitig gespeicherten digitalen Werte untereinander vorgenommen wird, daß

f) der bei jedem Vergleich ermittelte höchste gespeicherte digitale Wert als Digitalwert gewichtet und aufsummiert wird und daß

g) bei einem solcherart bei einem Vergleich ermittelten Digitalwert einer unterhalb der vorgegebenen Schwelle (S) liegenden Größe die Aufsummierung rückgängig gemacht wird.

2. Verfahren nach Anspruch 1 , **dadurch gekennzeichnet,** daß

h) ein Vergleich aller jeweils gleichzeitig gespeicherten digitalen Werte untereinander mit einer Rate ($f_2$) erfolgt, die kleiner als die Abtastrate ($f_1$) ist, mit der die gleichgerichtete Meßgröße (M) abgetastet wird.

3. Verfahren nach Anspruch 2 , **dadurch gekennzeichnet,** daß

i) bei einer zweiweg-gleichgerichteten Meßgröße eines Überstromes (J) mit der Frequenz $f_2$, bei einer Abtastrate $f_1$ und bei jeweils N gleichzeitig speicherbaren digitalen Werten eine Vergleichsrate $f_s$ nach der Beziehung $f_2 \geq f_1/N$ gewählt.

## Claims

1. Method for generating a tripping signal (Z) as a function of the magnitude and the duration of an overcurrent (J), in which

a) a rectified measured quantity (M), which is derived from the overcurrent (J), is scanned and the scanned measured values are converted into corresponding digital values;

b) the digital values for a given function are weighted accordingly and added up and, if a total value lies above a given comparison value, the tripping signal (Z) is established;

c) the adding-up is reset before the tripping signal (Z) is established if the overcurrent (J) falls below a given threshold (S) for a time, characterised in that

d) the digital values are stored for the last respective time period which corresponds to at least one half-period of the overcurrent (J), in that

e) a comparison is made of all the digital values, stored simultaneously in each case, one with the other, in that

f) the highest stored digital value determined in each comparison is weighted as a digital value and added up and in that

g) in the case of a digital value, determined along these lines in a comparison, having a magnitude lying below the given threshold (S), the adding-up is reset.

2. Method according to claim 1, characterised in that

h) a comparison of all the digital values, stored simultaneously in each case, one with the other takes place at a rate ($f_2$) which is smaller than the scanning rate ($f_1$) at which the rectified measured quantity (M) is scanned.

3. Method according to claim 2, characterised in that

i) in the case of a two-way rectified measured quantity of an overcurrent (J) with the frequency $f_s$, in the case of a scanning rate $f_1$ and in the case of, in each case, N digital values, which can be stored simultaneously, a comparison rate $f_2$ is selected according to the relationship $f_2 \geq f_1/N$

## Revendications

1. Procédé pour générer un signal de déclenchement (Z) en fonction de la grandeur et de la durée d'une surintensité de courant (J), selon lequel

a) une grandeur de mesure (M) dérivée de la surintensité (J) et redressée est échantillonnée et les valeurs de mesure échantillonnées sont converties en valeurs numériques correspondantes,

b) les valeurs numériques sont pondérées selon une fonction préfixée et totalisées, le signal de déclenchement (Z) étant formé si la valeur cumulée est supérieure à une valeur de comparaison préfixée et

c) la totalisation étant annulée, avant la formation du signal de déclenchement (Z), si la surintensité (J) passe pour un certain temps en-dessous d'un seuil (S) préfixé, caractérisé en ce que

d) les valeurs numériques du dernier laps de temps, correspondant au moins à une demi-période de la surintensité de courant (J), sont mémorisées,

e) une comparaison est effectuée entre toutes les valeurs numériques mémorisées simultanément,

f) la valeur numérique mémorisée maximale, déterminée à chaque comparaison, est pondérée et additionnée en tant que valeur numérique et

g) lorsqu'une valeur numérique ainsi déterminée lors d'une comparaison, présente une grandeur inférieure au seuil (S) préfixé, la totalisation est annulée.

2. Procédé selon la revendication 1, caractérisé en ce que

h) une comparaison entre toutes les valeurs numériques mémorisées simultanément s'effectue à une cadence ($f_2$) qui est plus petite que la cadence d'échantillonnage ($f_1$) avec laquelle la grandeur de mesure (M) redressée est échantillonnée.

3. Procédé selon la revendication 2, caractérisé en ce que

i) dans le cas d'une grandeur de mesure redressée pleine onde d'une surintensité de courant (J) ayant la fréquence ($f_s$), ou choisit une cadence de comparaison ($f_2$) selon la relation $f_2 \geq f_1/N$, où $f_1$ est la cadence d'échantillonnage et N représente le nombre de valeurs numériques susceptibles d'être mémorisées simultanément.

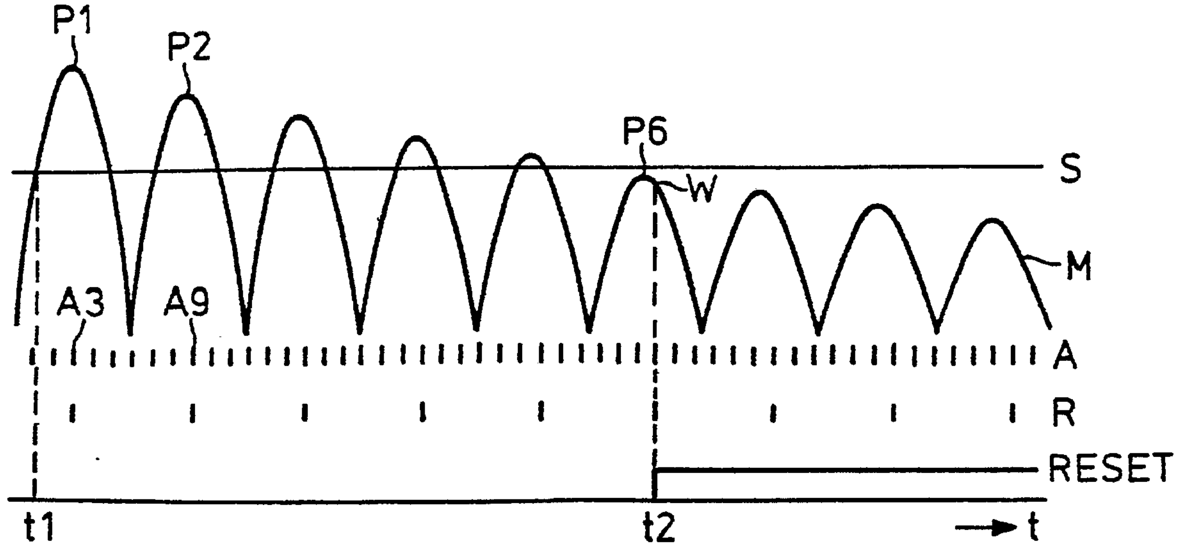


FIG 1

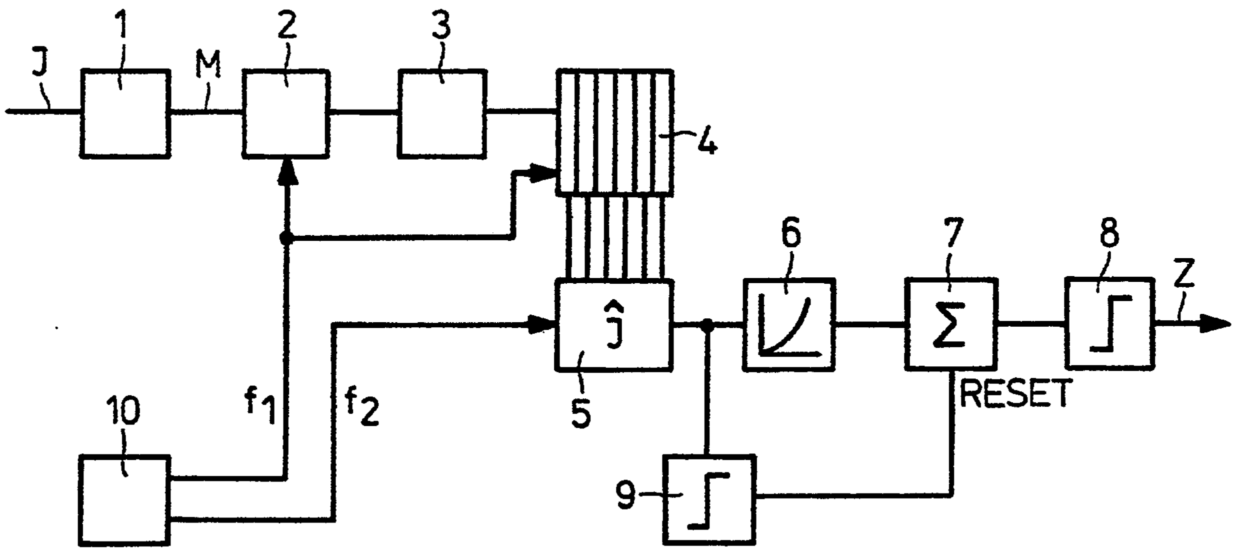


FIG 2